# EUROPÄISCHE PATENTANMELDUNG

(11) **EP 3 949 715 A1**
(43) Veröffentlichungstag der Anmeldung: **09.02.2022**
(21) Anmeldenummer: 21189642.8
(22) Anmeldetag: 04.08.2021
(51) Int. Cl.: A01D 43/08, A01D 45/02, B23K 26/342, C21D 1/06, C22C 29/08

(54) **KLINGE FÜR ROTIERENDE MESSER UND MAISGEBISS**

(30) Priorität: 05.08.2020 DE 202020104515 U
(71) Anmelder: WTN Werkzeugtechnik Niederstetten GmbH & Co. KG, 97996 Niederstetten (DE)
(72) Erfinder: Beck, Markus, 97996 Niederstetten (DE); Stauch, Gerhard, 74238 Krautheim (DE)
(74) Vertreter: Patentanwälte Ruff, Wilhelm, Beier, Dauster & Partner mbB

(57) **Zusammenfassung**

Die Erfindung betrifft eine Klinge für rotierende Messer zum Abschneiden von Halmen von Nutzpflanzen, insbesondere zum Abschneiden von Maishalmen mittels eines Maisgebisses, wobei die Klinge eine Schneidkante mit sägezahnartigen Schneidezähnen aufweist, wobei jeder Schneidezahn eine Zahnspitze, eine von der Zahnspitze ausgehende Zahnbrust und einen von der Zahnspitze ausgehenden Zahnrücken aufweist, und wobei jede Zahnbrust wenigstens abschnittsweise in einem Winkel zwischen 20° und 65°, insbesondere 30°, zu einer Senkrechten auf die Klingenfläche abgeschrägt ist.

## Beschreibung

Die Erfindung betrifft eine Klinge für rotierende Messer zum Abschneiden von Halmen von Nutzpflanzen, insbesondere zum Abschneiden von Maishalmen mittels eines Maisgebisses, wobei die Klinge eine Schneidkante mit sägezahnartigen Schneidezähnen aufweist, wobei jeder Schneidezahn eine Zahnspitze, eine von der Zahnspitze ausgehende Zahnbrust und einen von der Zahnspitze ausgehenden Zahnrücken aufweist. Die Erfindung betrifft auch ein Maisgebiss zum Abschneiden von Maishalmen mit wenigstens einem rotierenden Messer mit einer erfindungsgemäßen Klinge.

Beim Ernten von Mais werden sogenannte Maisgebisse verwendet, die zum Abschneiden von Maishalmen kurz über dem Boden verwendet werden. Maisgebisse haben mindestens eine um eine senkrecht zum Boden angeordnete Drehachse rotierende Trommel, die an ihrem Außenumfang mit einem Messer versehen ist. Das Messer weist eine umlaufende Klinge auf, die aus mehreren Klingensegmenten zusammengesetzt ist. Mittels der umlaufenden Trommel werden die Maishalme erfasst und mittels der Klinge des rotierenden Messers durchtrennt. Die abgetrennten Maispflanzen können dann weiterverarbeitet werden, beispielsweise indem sie dem Einlass eines Feldhäckslers zugeführt werden. Maisgebisse können als Vorsatzgeräte, insbesondere für Feldhäcksler, ausgebildet sein. Problematisch ist bei den rotierenden Messern von Maisgebissen die geringe Standzeit der Klingen der Messer. Während der Saison für die Maisernte kann es vorkommen, dass die Klingen der rotierenden Messer an Maisgebissen mehrfach gewechselt werden müssen. Bei großen Maisgebissen sind zahlreiche rotierende Messer vorgesehen. Das Auswechseln der Klingen erfordert daher einen erheblichen Zeitaufwand, währenddessen das Maisgebiss nicht einsatzbereit ist.

Mit der Erfindung soll eine Klinge für rotierende Messer und ein Maisgebiss hinsichtlich einer höheren Standzeit der Klingen verbessert werden.

Erfindungsgemäß ist hierzu eine Klinge für rotierende Messer mit den Merkmalen von Anspruch 1 und ein Maisgebiss mit den Merkmalen von Anspruch 17 vorgesehen. Vorteilhafte Weiterbildungen der Erfindung sind in den Unteransprüchen genannt.

Eine erfindungsgemäße Klinge für rotierende Messer zum Abschneiden von Halmen von Nutzpflanzen, insbesondere zum Abschneiden von Maishalmen mittels eines Maisgebisses, weist eine Schneidkante mit sägezahnartigen Schneidezähnen auf. Jeder Schneidezahn weist eine Zahnspitze, eine von der Zahnspitze ausgehende Zahnbrust und einen von der Zahnspitze ausgehenden Zahnrücken auf. Im Schneidebetrieb wird die Zahnbrust gegen den abzuschneidenden Halm bewegt. Jede Zahnbrust ist erfindungsgemäß wenigstens abschnittsweise in einem Winkel zwischen 20° und 65°, insbesondere 30°, zu einer Senkrechten auf die Klingenfläche abgeschrägt. Als Klingenfläche wird dabei eine parallel und mittig zur Oberseite und Unterseite der plattenförmigen Klinge gelegene, gedachte Ebene bezeichnet. Eine Senkrechte zur Klingenfläche ist also senkrecht zur Oberseite und Unterseite der Klinge angeordnet und ist auch senkrecht zu einer Bewegungsrichtung der Klinge im Betrieb angeordnet. Mit anderen Worten ist die Zahnbrust wenigstens abschnittsweise in einem Winkel zwischen 110° und 155°, insbesondere 120°, zur Bewegungsrichtung der Zahnbrust abgeschrägt. Eine solche abgeschrägte Gestaltung der Zahnbrust verbessert die Schneidwirkung der Klinge. Darüber hinaus wird eine sich selbst nachschärfende Geometrie der Klinge bereitgestellt.

In Weiterbildung der Erfindung ist ein Übergang zwischen einem Zahnrücken eines ersten Schneidezahns und einer Zahnbrust eines benachbarten, zweiten Schneidezahns ausgerundet und der ausgerundete Übergang ist wenigstens abschnittsweise in einem Winkel zwischen 20° und 65°, insbesondere 30°, zu einer Senkrechten auf die Klingenfläche abgeschrägt.

Mit anderen Worten ist der ausgerundete Übergang wenigstens abschnittsweise in einem Winkel zwischen 110° und 155°, insbesondere 120°, zur Bewegungsrichtung des Schneidezahns abgeschrägt. Indem auch der ausgerundete Übergang abgeschrägt wird, wird eine verbesserte Schneidwirkung erzielt und es wird eine sich selbst nachschärfende Geometrie bereitgestellt. Der Übergang zwischen jeweils einem Zahnrücken eines ersten Schneidezahns und einer Zahnbrust eines benachbarten, zweiten Schneidezahns ist dabei vorteilhafterweise so ausgerundet, dass die Rundung tangential in die Zahnbrust und den Zahnrücken übergeht.

In Weiterbildung der Erfindung ist der Zahnrücken jedes Schneidezahns parallel zu einer Senkrechten auf die Klingenfläche angeordnet.

Auf diese Weise können die Herstellungskosten gering gehalten werden, da der Zahnrücken keine Schneidewirkung hat.

In Weiterbildung der Erfindung weist jede Zahnbrust eine Zahnschneide auf, die angrenzend an eine Oberseite oder Unterseite der Klinge angeordnet ist und die parallel zu einer Senkrechten auf die Klingenfläche angeordnet ist.

Durch Ausbilden einer schmalen Zahnschneide mit einer Höhe größer null wird eine bessere Standfestigkeit der Zahnschneide gegenüber sehr schmalen Zahnschneiden erreicht, die durch eine Kante zwischen zwei im Winkel zueinander angeordneten Flächen gebildet sind. Die Ausbildung einer Zahnschneide, selbst wenn diese eine Höhe größer null aufweist, verbessert aber die Schneidwirkung erheblich. Durch Ausbilden einer parallel zu einer Senkrechten auf die Klingenfläche angeordneten Zahnschneide und die sich an die Zahnschneide anschließende Abschrägung der Zahnbrust wird eine selbstnachschärfende Geometrie der Zahnschneide bereitgestellt.

In Weiterbildung der Erfindung liegt eine Höhe der Zahnschneide im Bereich von einem Fünftel bis zu einem Sechstel der Höhe der Klinge und beträgt insbesondere 1 mm.

Die Zahnschneide ist dadurch ausreichend stabil und weist dennoch eine sehr gute Schneidwirkung auf.

In Weiterbildung der Erfindung sind eine Oberseite und eine Unterseite der Klinge wenigstens angrenzend an die Schneidkante mit einem Werkstoff beschichtet, der eine größere Härte als das Material der Klinge im Bereich der Schneidbrust aufweist.

Auf diese Weise wird eine wesentlich erhöhte Standfestigkeit der Klinge erzielt. Indem eine Oberseite und eine Unterseite dadurch härter sind als das Material der Klinge im Bereich der Schneidbrust wird eine selbstnachschärfende Ausbildung der Klinge bereitgestellt.

In Weiterbildung der Erfindung weist die Beschichtung Wolframcarbid auf.

Wolframcarbid weist eine sehr große Härte auf und lässt sich als Beschichtung auf Klingen aufbringen.

In Weiterbildung der Erfindung ist die Beschichtung aufgeschweißt, insbesondere mittels Laser aufgeschweißt.

In Weiterbildung der Erfindung ist die Beschichtung mittels Pulverbeschichtung aufgebracht.

Beispielsweise kann Wolframcarbidpulver heiß auf den Randbereich der Klinge aufgespritzt werden.

In Weiterbildung der Erfindung weist die Beschichtung eine Härte zwischen 75 HRC und 100 HRC, insbesondere 80 HRC bis 90 HRC, auf.

Auf diese Weise kann die Beschichtung deutlich härter als das Klingenmaterial ausgeführt werden. Beispielsweise kann Wolframcarbid als Beschichtung verwendet werden. HRC bedeutet dabei Härte nach Rockwell, Skala C.

In Weiterbildung der Erfindung ist die Klinge aus einem Einsatzstahl gefertigt und wenigstens im Bereich der Schneidklinge einsatzgehärtet.

Einsatzstahl lässt sich beispielsweise randschichthärten, so dass ausgehend von der Oberfläche der Klinge bis in eine vordefinierte Tiefe eine größere Härte der Klinge vorliegt. Dadurch lässt sich die Standzeit der Klinge erheblich verlängern.

In Weiterbildung der Erfindung ist die Klinge wenigstens im Bereich der Schneidkante bis zu einer Tiefe von 0,6 mm bis 1 mm, insbesondere 0,8 mm, einsatzgehärtet.

In Weiterbildung der Erfindung weist eine Oberfläche der Klinge wenigstens im Bereich der Schneidkante eine Härte zwischen 55 HRC und 65 HRC, insbesondere 60 HRC, auf.

Dadurch lässt sich gegenüber konventionellen Klingen eine wesentlich längere Standzeit erreichen. In Verbindung mit einer Beschichtung der Oberseite und Unterseite der Klinge wenigstens angrenzend an die Schneidkante kann dadurch eine selbstnachschärfende Ausbildung der Schneidkante erzielt werden. Eine Beschichtung aus Wolframcarbid weist eine Härte zwischen 80 HRC und 90 HRC auf und ist damit deutlich härter als eine Oberfläche der Klinge mit einer Härte von 60 HRC. Im Schneidebetrieb verschleißt dadurch die Beschichtung weniger stark als das Material der Klinge. Dadurch schärft sich die Klinge während des Schneidebetriebs selbst nach. Dadurch können gegenüber konventionellen Klingen erheblich längere Standzeiten erzielt werden.

In Weiterbildung der Erfindung ist die Klinge aus Einsatzstahl 1.7131 hergestellt.

Einsatzstahl 1.7131 lässt sich gut bearbeiten und kann einsatzgehärtet werden.

In Weiterbildung der Erfindung ist die Klinge ringförmig ausgebildet und weist mehrere Klingensegmente auf.

Das Vorsehen mehrerer Klingensegmente erleichtert die Handhabung der Klinge, insbesondere beim Auswechseln der Klinge.

In Weiterbildung der Erfindung weist die Klinge eine Höhe zwischen 5 mm und 6 mm auf.

Eine Höhe der Klinge wird zwischen einer Oberseite und einer Unterseite der Klinge gemessen. Konventionelle Klingen von Maisgebissen weisen eine Höhe von lediglich 4 mm auf. Eine größere Höhe der Klinge führt daher zu einer stabileren Ausbildung der Klinge und dadurch zu einer höheren Standzeit gegenüber konventionellen Klingen.

Das der Erfindung zugrunde liegende Problem wird auch durch ein Maisgebiss zum Abschneiden von Maishalmen mit wenigstens einem rotierenden Messer mit einer erfindungsgemäßen Klinge gelöst.

Weitere Merkmale und Vorteile der Erfindung ergeben sich aus den Ansprüchen und der nachfolgenden Beschreibung der Erfindung im Zusammenhang mit den Zeichnungen. Einzelmerkmale der unterschiedlichen, dargestellten und/oder beschriebenen Ausführungsformen lassen sich dabei in beliebiger Weise miteinander kombinieren, ohne den Rahmen der Erfindung zu überschreiten. Dies gilt auch für die Kombination von Einzelmerkmalen ohne weitere Einzelmerkmale, mit denen sie im Zusammenhang dargestellt oder beschrieben sind. In den Zeichnungen zeigen:
- Fig. 1: eine abschnittsweise Darstellung einer erfindungsgemäßen Klinge eines rotierenden Messers von oben,
- Fig. 2: eine Ansicht auf die Schnittebene A-A in Fig. 1,
- Fig. 3: die vergrößerte Einzelheit B aus Fig. 1,
- Fig. 4: eine schematische, abschnittsweise Darstellung der Klinge der Fig. 1 von schräg unten,
- Fig. 5: eine abschnittsweise Darstellung einer erfindungsgemäßen Klinge für ein rotierendes Messer von unten,
- Fig. 6: eine Ansicht auf die Schnittebene A-A in Fig. 5 und
- Fig. 7: eine vergrößerte Darstellung der Einzelheit Z aus Fig. 5.

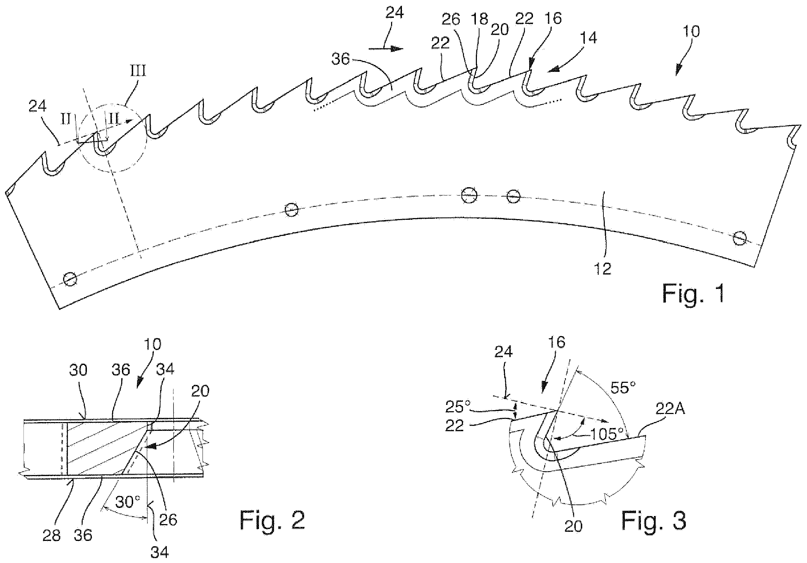

Fig. 1 zeigt eine abschnittsweise Darstellung einer Klinge 10 für ein rotierendes Messer eines sogenannten Maisgebisses in einer Draufsicht von oben. Fig. 1 zeigt ein Klingensegment 12. Die Klinge 10 wird aus mehreren Klingensegmenten 12 zusammengesetzt, so dass sich eine insgesamt ringförmige Klinge ergibt. Bei der dargestellten Ausführungsform werden acht Klingensegmente 12 zu einer ringförmigen Klinge zusammengesetzt.

Die Klinge 10 weist eine Schneidkante 14 mit zahlreichen, aufeinanderfolgenden Schneidezähnen 16 auf. Die Schneidezähne 16 sind jeweils sägezahnartig ausgebildet. Jeder Schneidezahn 16 weist eine Zahnspitze 18, eine von der Zahnspitze 18 ausgehende Zahnbrust 20 und einen ebenfalls von der Zahnspitze 18 ausgehenden Zahnrücken 22 auf.

Eine Bewegungsrichtung der Klinge 10 ist kreisförmig, so dass sich für die in Fig. 1 oben dargestellten Zähne eine Bewegungsrichtung etwa in Richtung des dargestellten Pfeils 24 ergibt. Die Zahnbrust 20 jedes Sägezahns 16 liegt also in Bewegungsrichtung 24 vorne, der Zahnrücken 22 jedes Schneidezahns 16 liegt in Bewegungsrichtung hinten.

Anhand der Fig. 3, welche die Einzelheit B aus Fig. 1 vergrößert darstellt, ist zu erkennen, dass jede Zahnbrust 20 zu der in Fig. 3 gestrichelt eingezeichneten Bewegungsrichtung 24 einen Winkel von 105° einnimmt. Der Zahnrücken 22 jedes Schneidezahns 16 schließt hingegen mit der Bewegungsrichtung 24 einen Winkel von etwa 25° ein.

Fig. 3 ist weiter zu entnehmen, dass die Zahnbrust 22 eines ersten Schneidezahns 16 mit dem Zahnrücken 22A eines in Bewegungsrichtung 24 vorne liegenden weiteren Schneidezahns einen Winkel von 55° einschließt.

Ein Übergang zwischen der Zahnbrust 20 eines ersten Schneidezahns 16 und dem Zahnrücken 22A eines zweiten, benachbarten und in Bewegungsrichtung vorne liegenden Schneidezahns ist ausgerundet. Fig. 1 und Fig. 3 ist dabei zu entnehmen, dass die Ausrundung tangential sowohl in die Zahnbrust 20 als auch den Zahnrücken 22A übergeht.

Bereits anhand der Fig. 1 ist zu erkennen, dass jede Zahnbrust 20 abschnittsweise abgeschrägt ist. Dieser abgeschrägte Bereich ist in Fig. 1 mit der Bezugsziffer 26 bezeichnet. Die Abschrägung erstreckt sich auch noch über die Ausrundung zwischen einer jeweiligen Zahnbrust 20 und dem benachbarten Zahnrücken 22. Die Abschrägung läuft dann aus, so dass der größte Teil jedes Zahnrückens 22 parallel zu einer Senkrechten auf die Klingenfläche oder Klingenebene angeordnet ist, wobei diese Senkrechte auf die Klingenfläche in Fig. 1 senkrecht zur Zeichenebene verläuft.

Fig. 2 zeigt eine Ansicht auf die Schnittebene A-A in Fig. 1. In Fig. 2 liegt die in Fig. 1 dem Betrachter zugewandte Oberseite 28 der Klinge 12 unten, eine Unterseite 30 der Klinge 12 hingegen oben.

Fig. 2 ist die abschnittsweise Abschrägung der Zahnbrust 20 im Bereich 26 zu entnehmen. Eine Senkrechte 34 zur Oberseite 28 und Unterseite 30 der Klinge 12, mit anderen Worten eine Senkrechte zur Klingenfläche, verläuft in Fig. 2 von oben nach unten. Der abgeschrägte Bereich 26 der Zahnbrust 20 schließt mit dieser Senkrechten 34 einen Winkel von 30° ein. Im Rahmen der Erfindung kann dieser Winkel zwischen 20° und 65° liegen.

Die Zahnbrust 20 weist weiter eine sich an den abgeschrägten Bereich 26 anschließende Zahnschneide 34 auf. Die Zahnschneide 34 ist parallel zur Senkrechten 34 angeordnet und geht von der Unterseite 30 aus. Die Zahnschneide 34 weist bei der dargestellten Ausführungsform eine Höhe von 1 mm auf. Die Klinge 12 weist bei der dargestellten Ausführungsform eine Höhe von 6 mm auf. Im Rahmen der Erfindung können die Höhe der Zahnschneide 34 und die Gesamthöhe der Klinge 12 variieren. Vorteilhaft ist, wenn die Höhe der Zahnschneide 34 zwischen einem Fünftel und einem Sechstel der Gesamthöhe der Klinge 12 beträgt.

In Fig. 2 ist auch zu erkennen, dass sowohl die Oberseite 28 als auch die Unterseite 30 der Klinge 12 mit einer Beschichtung 36 versehen ist. Diese Beschichtung 36 ist lediglich angrenzend an die Schneidkante 14 aufgetragen und in Fig. 1 lediglich im Bereich der mittleren Zähne angedeutet. Die Beschichtung weist bei der dargestellten Ausführungsform Wolframcarbid auf. Bei der dargestellten Ausführungsform wird das Wolframcarbid mittels Laser in den an die Schneidkante 14 angrenzenden Bereich aufgeschweißt. Im Rahmen der Erfindung kann die Beschichtung 36 auch entfallen. Im Rahmen der Erfindung kann die Beschichtung auch auf die Zahnschneide 34, auf den abgeschrägten Bereich 26 und/oder auf den Zahnrücken 22 aufgebracht sein. Dies ist in Fig. 2 durch gestrichelte Linien angedeutet.

Wolframcarbid weist eine sehr große Härte im Bereich zwischen 80 HRC bis 90 HRC auf. Das Material der Klinge 12 weist demgegenüber eine geringere Härte auf. Bei der dargestellten Ausführungsform ist die Klinge 12 aus Einsatzstahl 1.7131 hergestellt und wenigstens in dem sich an die Schneidkante 14 anschließenden Randbereich einsatzgehärtet. Das Material der Klinge hat dadurch eine Härte von etwa 60 HRC. Diese Härte wird bis zu einer Tiefe von etwa 0,8 mm erreicht.

Die Beschichtung 36 ist damit deutlich härter als die Zahnschneide 34 und der abgeschrägte Bereich 26. Im Schneidebetrieb wird dadurch die Zahnschneide 34 stärker verschleißen als die Beschichtung 36. Trotz Verschleiß bleibt die Klinge 12 dadurch scharf, da eine sich selbst nachschärfende Ausbildung bereitgestellt ist.

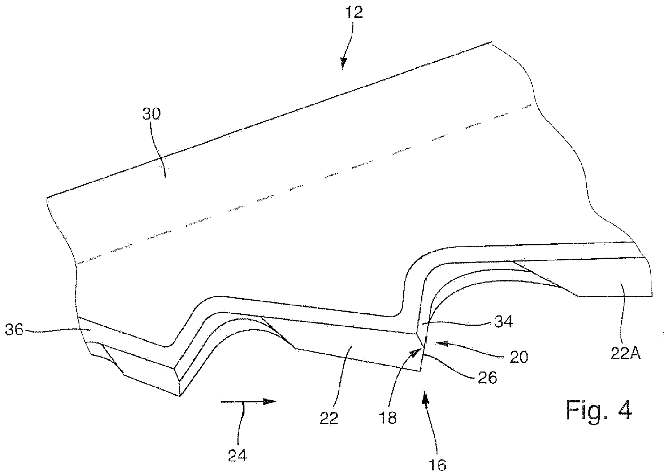

Die Darstellung der Fig. 4 zeigt schematisch und abschnittsweise die Klinge 12 der Fig. 1 in einer Ansicht von schräg unten. In Fig. 4 ist somit die Unterseite 30 der Klinge 12 dem Betrachter zugewandt. In Fig. 4 ist lediglich ein Schneidezahn 16 vollständig dargestellt. Zu erkennen ist die Zahnschneide 34 des vollständig dargestellten Schneidezahns 16 und der sich in Richtung von der Unterseite 30 weg anschließende abgeschrägte Bereich 26 der Zahnbrust 20. Der Zahnrücken 22 schließt sich entgegen der Bewegungsrichtung 24 an die Zahnspitze 18 an. Die Zahnspitze 18 wird zwar als Spitze bezeichnet, ist aber tatsächlich eine in Höhenrichtung der Klinge 12 verlaufende Kante.

Der abgeschrägte Bereich 26 verläuft über die Ausrundung zwischen der Zahnbrust 20 und dem in Bewegungsrichtung 24 vorne liegenden Zahnrücken 22A des nächsten Schneidezahns, der in Fig. 4 nicht mehr vollständig dargestellt ist. Der abgeschrägte Bereich 26 erstreckt sich auch noch ein Stück weit in den Zahnrücken 22A hinein. Auch die Zahnschneide 34 erstreckt sich noch in die Ausrundung hinein.

Die Beschichtung 36 kann im Rahmen der Erfindung beispielsweise mittels Pulverbeschichtung aufgebracht sein und alle Schneidezähne 16 einschließlich Zahnspritze 18, Zahnschneide 34, Zahnbrust 20 und Zahnrücken 22 können vollständig beschichtet sein. In diesem Fall ist auch ein größerer Abschnitt der Unterseite 30 und der Oberseite 28 beschichtet, insbesondere ein Abschnitt bis zu einer in Fig. 4 gestrichelt eingezeichneten Linie, die parallel zur Innenkante der Klinge 12 verläuft. Die Beschichtung kann sich auch über die vollständige Oberseite 28 und Unterseite 30 der Klinge 12 einschließlich der vollständigen Schneidezähne 16 erstrecken.

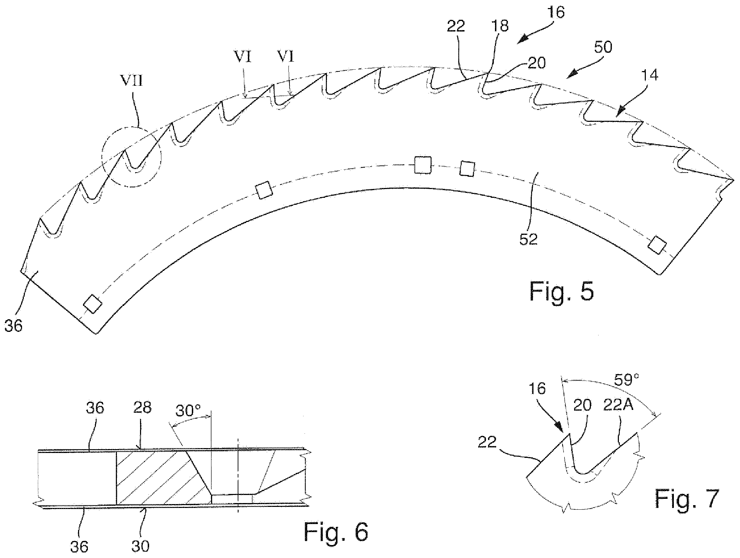

Fig. 5 zeigt eine Klinge 50 gemäß einer weiteren bevorzugten Ausführungsform der Erfindung in einer Ansicht von unten. Die Unterseite der Klinge 52 ist also in Fig. 5 dem Betrachter zugewandt. Die Klinge 52 ist sehr ähnlich zu der Klinge 10 der Fig. 1 bis 4 ausgebildet. Identisch oder zumindest funktionsgleich ausgebildete Elemente der Klingen 10, 50 werden daher mit denselben Bezugszeichen bezeichnet und nicht erneut erläutert.

Die Klinge 50 ist für einen kleineren Durchmesser eines rotierenden Messers vorgesehen. In Fig. 5 ist ein Klingensegment 52 dargestellt. Vier Klingensegmente 52 werden zu der ringförmigen Klinge 50 zusammengesetzt.

Fig. 6 zeigt eine Ansicht auf die Schnittebene A-A in Fig. 5. In Fig. 6 liegt eine Unterseite 30 der Klinge 50 daher unten, eine Oberseite 28 oben.

Fig. 7 zeigt eine vergrößerte Darstellung der Einzelheit Z aus Fig. 5. Es ist zu erkennen, dass die Zahnbrust 20 eines ersten Schneidezahns 16 und der Zahnrücken 22a des in Bewegungsrichtung vorne liegenden nächsten Schneidezahns einen Winkel von 59° einschließen.

In Fig. 5 ist zu erkennen, dass eine Beschichtung 36 aus Wolframcarbid sich über eine größere Fläche als bei der Klinge 10 der Fig. 1 erstreckt. Die Beschichtung 36 aus Wolframcarbid ist mittels Pulverbeschichtung in dem an die Schneidkante 14 angrenzenden Bereich aufgebracht. Im Rahmen der Erfindung kann die Beschichtung auch entfallen.

Mit der erfindungsgemäßen Klinge ist es möglich, bei einem Maisgebiss zum Abschneiden von Maishalmen eine wesentlich höhere Standzeit der rotierenden Messer des Maisgebisses zu erzielen als mit konventionellen Klingen. Die Klingen der rotierenden Messer müssen bei einem erfindungsgemäßen Maisgebiss daher weniger oft ausgewechselt werden und sollen idealerweise so ausgelegt sein, dass während der gesamten Saison der Maisernte kein Wechsel der Klingen erforderlich ist. Trotz eines gegenüber konventionellen Klingen höheren Preises der erfindungsgemäßen Klingen wird dadurch eine deutliche Einsparung erzielt, da Stillstandszeiten des Maisgebisses, die durch Wechseln der Klingen bedingt sind, während der Saison der Maisernte idealerweise vollständig entfallen, zumindest aber verringert sind. Die erfindungsgemäße Klinge kann einsatzgehärtet sein. Alternativ kann die Klinge auf der Oberseite und Unterseite mit einer Beschichtung aus Wolframcarbid wenigstens in dem an die Schneidkante angrenzenden Bereich versehen sein. Diese Beschichtung kann aufgeschweißt oder mittels Pulverbeschichtung aufgebracht sein. Im Rahmen der Erfindung kann auch eine einsatzgehärtete Klinge auf der Oberseite und Unterseite wenigstens in dem an die Schneidkante angrenzenden Bereich mit einer Beschichtung aus Wolframcarbid versehen sein.

## Patentansprüche

1. Klinge für rotierende Messer zum Abschneiden von Halmen von Nutzpflanzen, insbesondere zum Abschneiden von Maishalmen mittels eines Maisgebisses, wobei die Klinge eine Schneidkante mit sägezahnartigen Schneidezähnen aufweist, wobei jeder Schneidezahn eine Zahnspitze, eine von der Zahnspitze ausgehende Zahnbrust und einen von der Zahnspitze ausgehenden Zahnrücken aufweist, **dadurch gekennzeichnet, dass** jede Zahnbrust wenigstens abschnittsweise in einem Winkel zwischen 20° und 65°, insbesondere 30°, zu einer Senkrechten auf die Klingenfläche abgeschrägt ist.

2. Klinge nach Anspruch 1, **dadurch gekennzeichnet, dass** ein Übergang zwischen einem Zahnrücken eines ersten Schneidezahns und einer Zahnbrust eines benachbarten, zweiten Schneidezahns ausgerundet ist und dass der ausgerundete Übergang wenigstens abschnittsweise in einem Winkel zwischen 20° und 65°, insbesondere 30°, zu einer Senkrechten auf die Klingenfläche abgeschrägt ist.

3. Klinge nach Anspruch 1 oder 2, **dadurch gekennzeichnet, dass** der Zahnrücken jedes Schneidezahns zumindest abschnittsweise parallel zu einer Senkrechten auf die Klingenfläche angeordnet ist.

4. Klinge nach einem der vorstehenden Ansprüche, **dadurch gekennzeichnet, dass** jede Zahnbrust eine Zahnschneide aufweist, die angrenzend an eine Oberseite oder Unterseite der Klinge angeordnet ist und die parallel zu einer Senkrechten auf die Klingenfläche angeordnet ist.

5. Klinge nach Anspruch 4, **dadurch gekennzeichnet, dass** eine Höhe der Zahnschneide im Bereich von einem Fünftel bis zu einem Sechstel der Höhe der Klinge liegt, insbesondere 1mm beträgt.

6. Klinge nach einem der vorstehenden Ansprüche, **dadurch gekennzeichnet, dass** eine Oberseite und eine Unterseite der Klinge wenigstens angrenzend an die Schneidkante mit einem Werkstoff beschichtet sind, der eine größere Härte als das Material der Klinge im Bereich der Schneidbrust aufweist.

7. Klinge nach Anspruch 6, **dadurch gekennzeichnet, dass** jeder Schneidezahn einschließlich Zahnspitze, Zahnbrust und Zahnrücken vollständig mit dem Werkstoff mit größerer Härte beschichtet ist.

8. Klinge nach Anspruch 6 oder 7, **dadurch gekennzeichnet, dass** die Beschichtung Wolframcarbid aufweist.

9. Klinge nach Anspruch 6, 7 oder 8, **dadurch gekennzeichnet, dass** die Beschichtung aufgeschweißt ist, insbesondere mittels Laser aufgeschweißt ist.

10. Klinge nach Anspruch 6, 7 oder 8, **dadurch gekennzeichnet, dass** die Beschichtung mittels Pulverbeschichtung aufgebracht ist.

11. Klinge nach einem der Ansprüche 6 bis 10, **dadurch gekennzeichnet, dass** die Beschichtung eine Härte zwischen 75 und 100 HRC, insbesondere 80HRC bis 90 HRC, aufweist.

12. Klinge nach wenigstens einem der vorstehenden Ansprüche, **dadurch gekennzeichnet, dass** die Klinge aus einem Einsatzstahl gefertigt ist und wenigstens im Bereich der Schneidklinge einsatzgehärtet ist.

13. Klinge nach Anspruch 12, **dadurch gekennzeichnet, dass** die Klinge wenigstens im Bereich der Schneidkante bis zu einer Tiefe von 0,6mm bis 1mm, insbesondere 0,8mm, einsatzgehärtet ist.

14. Klinge nach wenigstens einem der vorstehenden Ansprüche, **dadurch gekennzeichnet, dass** eine Oberfläche der Klinge wenigstens im Bereich der Schneidkante eine Härte zwischen 55 HRC und 65 HRC, insbesondere 60HRC aufweist.

15. Maisgebiss zum Abschneiden von Maishalmen **gekennzeichnet durch** wenigstens ein rotierendes Messer mit einer Klinge nach wenigstens einem der Ansprüche 1 bis 14.
